# EUROPEAN PATENT APPLICATION

(11) **EP 2 597 437 A1**
(43) Date of publication of application: **29.05.2013**
(21) Application number: 11460057.0
(22) Date of filing: 28.11.2011
(51) Int. Cl.: G01H 1/00

(54) **A method of assessing the technical condition of a rotating shaft**

(71) Applicant: ABB Technology AG, 8050 Zürich (CH)
(72) Inventor: Orman, Maciej, 32-052 Radziszów (PL); Ottewill, James, Ruislip, Middlesex HA4 9QY (GB); Orkisz, Michal, 30-076 Krakow (PL)
(74) Representative: Chochorowska-Winiarska, Krystyna

(57) **Abstract**

The present invention is concerned with a method of assessing the technical condition of a rotating shaft (6) by combining measurements from sensors (1,2,3,4) to create the shaft trajectories in three dimensions and to compare them with patterns of theoretical shapes obtained from a theoretical model. The comparison allows for failures of the rotating machinery to be identified. The whole procedure is realized in the following steps. Measuring synchronized analog vibration signals obtained from sensor devices located close to first and second bearing respectively. Converting analog vibration signals into discrete vibration signals. Converting discrete vibration signals into discrete displacement signals in order to receive discrete filtered displacement signals of synchronized samples. Delivering into the computer device three-dimensional theoretical models of the rotating shaft containing patterns of theoretical shapes describing different condition of the rotating shaft. Preparing three-dimensional real model image of the rotating shaft that reflects movement of the rotating shaft near to bearings. Assessing the technical condition of the rotating shaft by comparing three-dimensional real model image with patterns of theoretical shapes and, through comparison, selecting one of the patterns of theoretical shapes which is the closest to the three-dimensional real model image and reflects the condition of the rotating shaft.

## Description

The present invention is concerned with a method of assessing the technical condition of a rotating shaft supported by bearings and recognition of a shaft failure. The method is based on vibration measurements realized by vibration sensors. Measured signals are transformed and presented in a three-dimensional plot which allows for distinction between shaft failures. Recognized failure is used for further calculation, especially for estimation of the remaining lifetime of the bearings.

### BACKGROUND OF THE INVENTION

Various types of rotating machinery form key parts of many industrial processes. Accurate and robust methods of monitoring the condition of said machinery need to be employed in order to minimize downtime due to both planned and unplanned maintenance. It is typical to instrument rotating machinery with casing-mounted vibration sensors such as accelerometers or proximity probes. All rotating shafts transmit some vibrations to their surroundings. It is possible to identify, either via modeling or from empirical investigation, a typical vibration signature of a healthy machine. A change in operating conditions of a machine will be reflected in a divergence in the vibrations transmitted by that machine to the surroundings from the equivalent vibration signature of a healthy machine. In order to extract information regarding the current state of the machine, the vibration signals measured using vibration sensors may be analyzed using known techniques such as spectral analysis, time frequency analysis or time domain metrics.

One of the known methods of analyzing the vibrations of machinery including a rotating shaft requires two vibration sensors such as accelerometers to be mounted on the casing of the machinery near to a bearing supporting the shaft. Two such sensors are mounted orthogonally to one another and to the axis of rotation of the shaft. By synchronously sampling the signals obtained from sensors oriented in such a way and by displaying two-dimensional plot including one signal as a function of the second signal, it is possible to estimate the dynamic path of the centre of the shaft in the plane orthogonal to the shaft. Such paths can give information regarding misalignment, mounting problems or unbalance of the shaft.

The analysis of dynamic paths of a shaft in two dimensions has the potential to return more information regarding the nature of a failure than traditional analysis of vibration signals recorded from one vibration sensor, which may be considered as one-dimensional. International patent application WO 2008/049167 describes a diagnostic system, method and apparatus for rotating machinery. Pairs of proximity probes are orthogonally mounted at one or more bearing locations with the purpose of measuring the proximity of the shaft to the bearing. By analyzing both constant and alternating components of signals measured from the proximity probes it is possible to determine the mean shaft position and the dynamic path of the shaft. It is then possible to represent the dynamic positions of the center of the shafts in single image. Next, comparing the image with equivalent images obtained from derived models of the system it is possible to determine various failures of the rotating machinery. However, some failures cannot be distinguished. Two-dimensional plots of the shaft unbalance and eccentricity can be similar and, as a result recognition of a failure is impossible. To distinguish such failures a new method is needed, which uses additional signal correlations taken from other sensors and shows how the shaft moves in three-dimensions.

### SUMMARY OF THE INVENTION

The invention described herein is designed to assess the technical condition of a rotating shaft by combining measurements from sensors to create the shaft trajectories in three dimensions and to compare them with patterns of theoretical shapes obtained from theoretical model. The comparison allows for the identification of failures of rotating machinery. The whole procedure is realized in the following steps.
● Measuring synchronized analog vibration signals obtained from sensor devices located close to a first and second bearing respectively. Converting analog vibration signals into discrete vibration signals that consist of vectors including samples (*u_{A1,} u_{A2},* ... *u_{An}*), (*u_{B1}, u_{B2},* ... *u_{Bn}*), (*u_{C1}, u_{C2,}* ... *u_{Cn}*), (*u_{D1,} u_{D2},* ... *u_{Dn}*) respectively, where samples (*u_{A1}, u_{B1}, u_{C1}, u_{D1}*), (*u_{A2}, u_{B2}, u_{C2}, u_{D2}*), ... (u*_{An}, u_{Bn}, u_{Cn}, u_{Dn}*) are recorded at the same moment of time. Converting discrete vibration signals by a known method into discrete displacement signals in order to receive discrete filtered displacement signals of synchronized samples.
● Preparing three-dimensional real model image of the rotating shaft, in a form of a wireframe image, that reflects real movement of the rotating shaft near to bearings by transforming discrete filtered displacement signals into clusters of points forming the dynamic path of the rotating shaft on two parallel planes first *x-y* and second *x'-y'* of an orthogonal axis of Cartesian system, in which an orthogonal z-axis corresponds to the longitudinal axis of the rotating shaft. Connecting with lines the synchronized points from cluster of points located on the plane *x-y* and points from cluster of points located on the plane *x'-y'*.
● Delivering by user into the computer device three-dimensional theoretical models of the rotating shaft containing patterns of theoretical shapes in a form of different wireframe images describing different condition of the rotating shaft.
● Assessing the technical condition of the rotating shaft by comparing three-dimensional real model image in a form of a wireframe with different patterns of theoretical shapes in a form of wireframe images and on the base on the comparison selecting one of the patterns of theoretical shapes which is the closest to the three-dimensional real model image and reflects the condition of the rotating shaft.

Preferably an unbalance failure of the shaft is recognized when a three-dimensional real model image *S* is recognized as a shape similar to one of the patterns of theoretical shapes being a cylinder placed along z-axis and having elliptical or circular bases in *x-y* and *x'-y*' planes.

Alternatively an eccentricity failure of the shaft is recognized when three-dimensional real model image *S* is presented as a shape similar to one of the patterns of theoretical shapes being a composition of two cones placed along z-axis, connected with vertices, having elliptical or circular bases in *x-y* and *x*'-*y*' planes.

Alternatively soft-foot failure and an unbalance failure of the shaft is recognized when a three-dimensional real model image *S* is presented as the shape similar to the one of the patterns of theoretical shapes being a longitudinal solid having two parallel bases in *x-y* and *x'-y'* planes, of which one base is elliptical or circular and the second base has an irregular shape.

Alternatively submission of soft-foot failure and an eccentricity failure of the shaft is recognized when three-dimensional real model image *S* is presented as the shape similar to the one of the patterns of theoretical shapes *S_{P1}, S_{P2},... S_{Pk}* being a composition of two solids similar to cones connected with vertices, placed along z-axis, having parallel bases in *x-y* and *x'-y*' planes, of which one base is elliptical or circular and the second base has an irregular shape.

A system for assessing the technical condition of a rotating shaft, wherein a shaft is supported by at least two bearings comprising sensor devices for sensing vibration signals of the rotating shaft which are located close to a bearing in the plane orthogonal to the axis of rotation of the shaft and being connected with a measuring device equipped with a computer processing device having standard elements such as a processor with a processing module and graphic unit interface, memory and data storage module, characterized in that said system comprises a database with patterns of theoretical shapes, a module for preparing three-dimensional real model image of the rotating shaft from measured data, said module connected to a comparison module for comparing three-dimensional real model image with patterns of theoretical shapes in a form of wireframe shapes given from database and connected with device for visualizing the result of assessing the technical condition of a rotating shaft.

Preferably the sensor devices are so arranged that an angle in a plane *x-y* between sensor devices has a value ranging from 30 degree to 150 degree.

Preferably the sensor devices are so arranged that an angle in a plane *x-y* between sensor devices has a value 90 degree.

Alternatively the sensor devices are so arranged that an angle in a plane *x'-y'* between sensor devices has a value ranging from 30 degree to 150 degree.

Preferably the sensor devices are so arranged that an angle in a plane *x'-y*' between sensor devices has a value 90 degree.

The main advantage of the inventive method is that it allows for an assessment of the technical condition of a rotating shaft to be made, by creating a three-dimensional model of the rotating shaft and comparing it with patterns of shapes obtained from a theoretical model. The inventive method allows, unlike existing methods, to distinguish between unbalance and eccentricity failures of the rotating shaft. If more than one failure is present in the shaft, for example soft-foot combined with unbalance or eccentricity, the inventive method also allows to distinguish between them, that is, for example, between soft-foot with unbalance and soft-foot with eccentricity failure of the shaft.

### BRIEF DESCRIPTION OF THE DRAWING

The subject of the invention is presented as an exemplary embodiment in the drawing, where:
fig. 1 shows a block diagram of the system for the realization of the invention,
fig. 2 shows an arrangement of sensors of the rotating shaft in the axonometric view,
fig. 3 shows a table including sample patterns of theoretical shapes of three-dimensional theoretical models of the rotating shaft,
fig. 4 shows a three-dimensional model illustrating a healthy shaft,
fig. 5 shows a three-dimensional model illustrating unbalance failure of the shaft,
fig. 6 shows a three-dimensional model illustrating eccentricity failure of the shaft,
fig. 7 shows a three-dimensional model illustrating submission of soft-foot and unbalance failures of the shaft,
fig. 8 shows a three-dimensional model illustrating submission of soft-foot and eccentricity failures of the shaft.

### DETAILED DESCRIPTION OF THE INVENTION

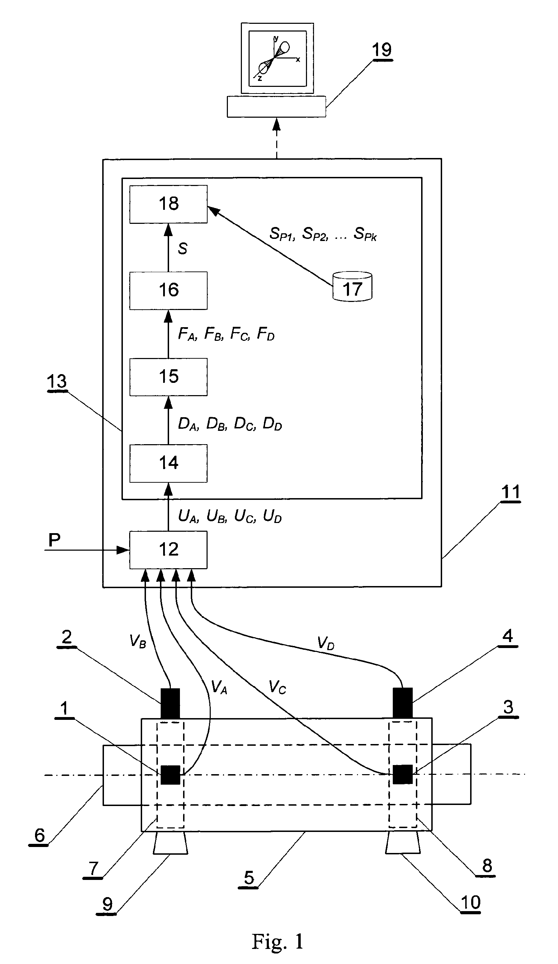

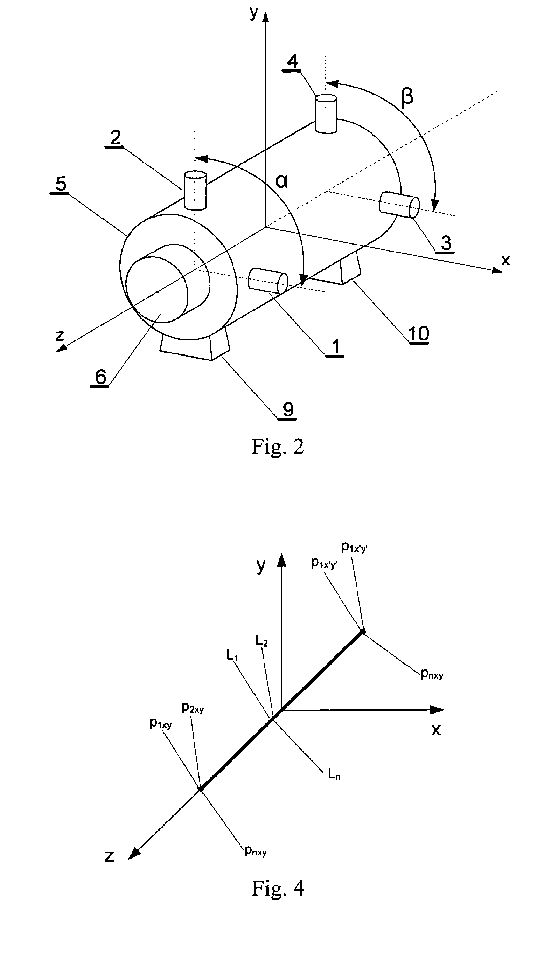

The measuring system for the realization of the method according to the invention, shown in Fig. 1, comprises sensor devices 1, 2, 3, 4 connected to a casing 5 of rotating shaft 6. Sensor devices 1, 2, 3, 4 can be of any type of vibration sensors such as acceleration sensors or velocity sensors or displacement sensors. The rotating shaft 6 is supported by bearings 7 and 8. Sensor devices 1 and 2 are attached to the casing 5 close to the bearing 7, preferably in plane of the bearing 7 orthogonally to the rotating shaft 6. Similarly, sensor devices 3 and 4 are attached to the casing 5 close to the bearing 8, preferably in the plane of the bearing 8 orthogonally to the rotating shaft 6. The casing 5 is attached to the ground by supports 9 and 10. Fig. 2 shows relative position of sensor devices. The angle *α* between sensor devices 1 and 2 has a value ranging from 30 degree to 150 degree, preferably 90 degrees. Similarly, the angle *β* between sensor devices 3 and 4 has a value ranging from 30 degree to 150 degree, preferably 90 degrees.

The sensor devices 1, 2, 3 and 4 are connected with a measuring device 11 comprising an analog to digital converter 12 which is connected with a computer device 13 equipped with standard elements such as processor, memory, data storage module and graphic unit interface not shown on the drawing. It is also equipped with a following modules which are suitable for the realization of the method according to the invention: processing module 14, a filtration module 15, a module 16 creating three-dimensional real model image *S* of the rotating shaft from measured data, a database 17 including patterns of theoretical shapes *S_{P1}, S_{P2}, ... S_{Pk}* in the form of different wireframe images and a comparison module 18, connected to modules 16 and database 17, for comparing a three-dimensional real model image *S* from module 16 with patterns of theoretical shapes *S_{P1}, S_{P2}, ... S_{Pk}* from database 17 and giving the results of comparison in the form of three-dimensional plot which shows the best fit pattern of shapes. The computer processing device 13, through the measuring device 11, is coupled with a device 19 for visualizing the results obtained by executing the inventive method. In the presented embodiment of the invention, the measuring device 11 is integrated with the computer device 13, but the measuring device and the computer device may be separate devices, which is not shown in the drawing. In such case the device 19 for visualizing the results is directly or remotely connected with the computer device 13.

The method according to the invention is executed in the following steps 1 - 4.

### Step 1

In step one, the analog vibration signals *V_{A}, V_{B}, V_{C}*, *V_{D}* from sensor devices 1, 2, 3, 4 located on casing 5 of rotating shaft 6 are measured synchronously, which signals are then converted to discrete vibration signals *U_{A}, U_{B}, U_{C}, U_{D}* in an analog to digital converter 12 to which constant parameters *P* are supplied by user, which parameters characterize the process of conversion of analog signals to discrete signals, i.e. the sampling rate and the length of the signal subjected to conversion. The sampling rate defines the number of samples per second taken from the analog signals of vibrations *V_{A}, V_{B}, V_{C,} V_{D}.* Usually the minimum sampling rate is 1 kHz and this is the default setting. Signal length defines the length of the analog vibration signals *V_{A}, V_{B}, V_{C}, V_{D}* taken for analog to digital conversion. In the embodiment of the inventive method the minimum value of the signal length is 2s. Whole number of samples *n* for each discrete vibration signal *U_{A}, U_{B}, U_{C}, U_{D}* consists of the same number of samples *n*. The samples for discrete vibration signal *U_{A}* are denoted as *u_{A1}, u_{A2},* ... *u_{An},* and for signals *U_{B}, Uc, U_{D}* respectively: *u_{B1}, u_{B2},* ... *u_{Bn}; u_{C1,} u_{C2},* ... *u_{Cn}; u_{D1}, u_{D2},* ... *u*_{*Dn*·} Samples denoted with the same index are synchronized, which means they have been recorded at the same moment of time. The first synchronized samples are *u_{A1}, u_{B1}, u_{C1}, u_{D1},* next *u_{A2}, u_{B2}, u_{C2,} u_{D2}* and respectively all samples up to *u_{An}, u_{Bn}, u_{Cn}, u_{Dn.}*

The discrete signals *U_{A}, U_{B}, U_{C}, U_{D}* are automatically transmitted to the processing module 14 in the computer device 13.

Next, the discrete signals *U_{A}, U_{B}, U_{C,} U_{D}* are converted to discrete displacement signals *D_{A}, D_{B}, D_{C,} D_{D}* using the following techniques. If the sensor devices 1 - 4 are velocity sensors then displacement values can be obtained from velocity values using an integration calculation which is well known to those skilled in the art. In the case that the sensor devices 1 - 4 are acceleration sensors, then the integration calculation must be performed twice: first, acceleration values are transformed into velocity values and then velocity values are transformed into displacement values. If the sensor devices 1 - 4 are displacement sensors the discrete signals *U_{A}, U_{B}, U_{C}, U_{D}* are identical with discrete displacement signals *D_{A}, D_{B}, Dc, D_{D}.*

Next, in the filtration module 15 of the computer device 13 discrete displacement signals *D_{A}, D_{B}, D_{C,} D_{D}* are filtered by using a band pass filter. Signal filtration is known to those who are skilled in the art. The bandwidth of the filter is limited to ±40% of the frequency which is the rated shaft speed in rotation per minute divided by 60. Discrete filtered displacement signals *F_{A}, F_{B}, F_{C}, F_{D}* are the results of this step.

### Step 2

In this step, the discrete filtered displacement signals *F_{A}, F_{B}, F_{C}, F_{D}* are used to prepare three-dimensional real model image *S* that reflects the movement of the rotating shaft near to bearings 7 and 8. Preparation of the three-dimensional real model image *S* is realized in the module 16 in the following way.

A dynamic path of the rotating shaft 6 close to bearing 7 is created. Discrete filtered displacement signal *F_{A}* in function of the discrete filtered displacement signal *F_{B}* is transformed to the cluster of points *p_{1xy}, p_{2xy},* ... *p_{nxy}.* The cluster forms dynamic path of the rotating shaft 6 on *x-y* plane of an orthogonal axis of Cartesian system. Similarly a dynamic path is created for the rotating shaft 6 close to bearing 8: discrete filtered displacement signal *F_{C}* in function of the discrete filtered displacement signal *F_{D}* is transformed into cluster of points *p_{1x'y'}, P_{2x'y'},* ... *p_{nx'y'}.* The cluster forms a dynamic path of the rotating shaft 6 on *x'-y'* plane of an orthogonal axis of Cartesian system. Planes x-*y* and *x'-y'* are parallel, placed along an orthogonal z-axis of Cartesian system. Z-axis represents the longitudinal axis of the rotating shaft 6. The distance between planes *x-y* and *x'-y'* corresponds to the distance between sensor devices 1 and 3 or 2 and 4.

Discrete filtered displacement signals *F_{A}, F_{B}, F_{C}, F_{D}* consist of samples that are mutually synchronized and therefore after transformation, each pair of points: one point from the cluster of points *p_{1xy}, p_{2xy},* ... *p_{nxy}* and the second point from cluster of points *p_{1x'y'}, p_{2x'y'},* ... *p_{nx'y'},* denoted with the same index, are synchronized too.

All pairs of synchronized points from cluster of points (*p_{1xy}, p_{2xy},* ... *p_{nxy}*) and cluster of points (*p_{1x'y'}, p_{2x'y'},* ... *p_{nx'y'}*) are connected by lines *L₁, L₂, ...Lₙ.* Both clusters of points connected by lines create three-dimensional real model image *S* in a form of a wireframe, the shape of which describes the movement of the rotating shaft. The examples of various three-dimensional real model images are shown on fig. 4 - 8.

### Step 3

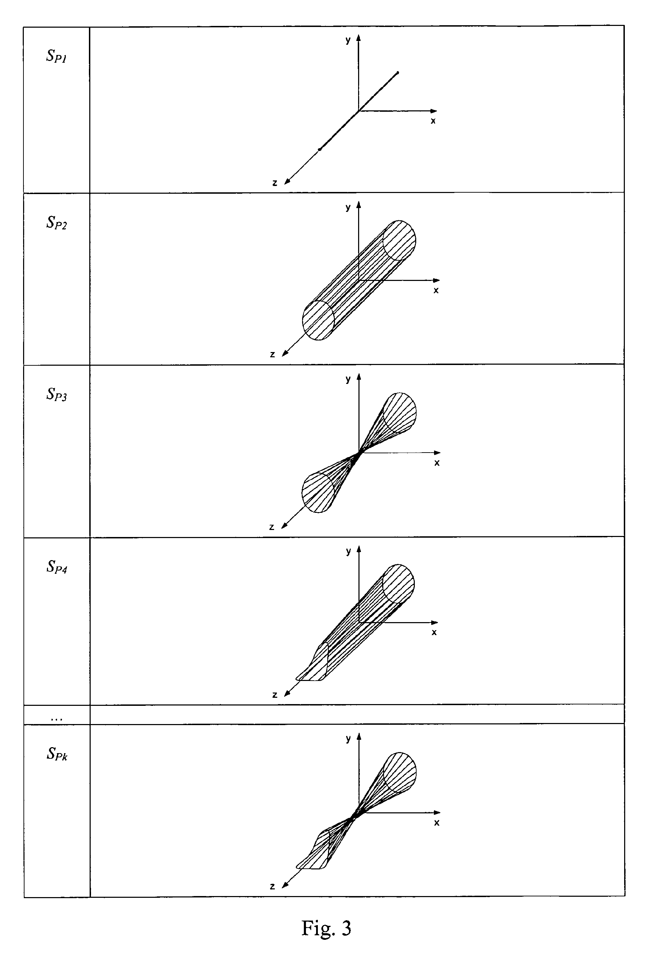

In this step, a user delivers into the database 17 three-dimensional theoretical models of the rotating shaft containing patterns of theoretical shapes (*S_{P1}, S_{P2},... S_{Pk})* in a form of different wireframe images describing different condition of the rotating shaft. Fig. 3 shows a table including examples of patterns of theoretical shapes.

### Step 4

In this step, the three-dimensional real model image *S* prepared in module 16 is compared with patterns of theoretical shapes *S_{P1}, S_{P2},... S_{Pk}* in the form of wireframe images stored in the database 17. The comparison is realized in module 18.

Using known methods of a shape recognition, three-dimensional real model image *S* is compared with particular patterns of theoretical shapes *S_{P1}, S_{P2},... S_{Pk}* from which, one pattern is selected, which has the shape closest to the three-dimensional real model image *S*. Selected pattern is linked to particular failure of the rotating shaft and therefore the selection reflects the condition of the rotating shaft.

In the case of a perfectly mounted, healthy shaft, both clusters of points concentrates close to singular points on *x-y* and *x'-y'* planes respectively. Synchronized points connected by lines create a single line or lines placed close to each other and they are identical with the longitudinal axis of the rotating shaft 6. Fig. 4 shows a wireframe of the three-dimensional real model image *S* created in such case, which is similar to singular line placed along z-axis.

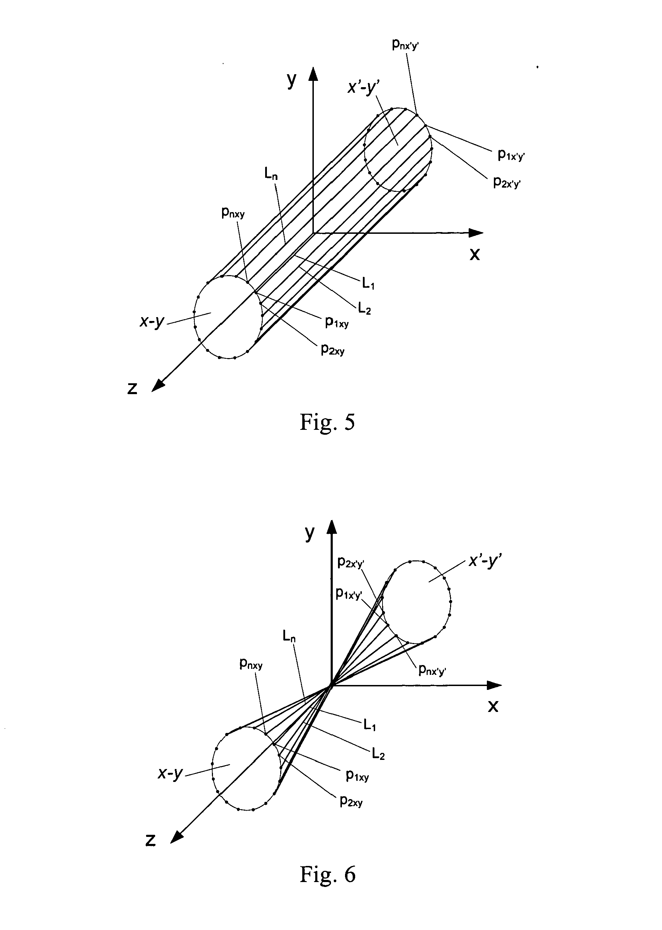

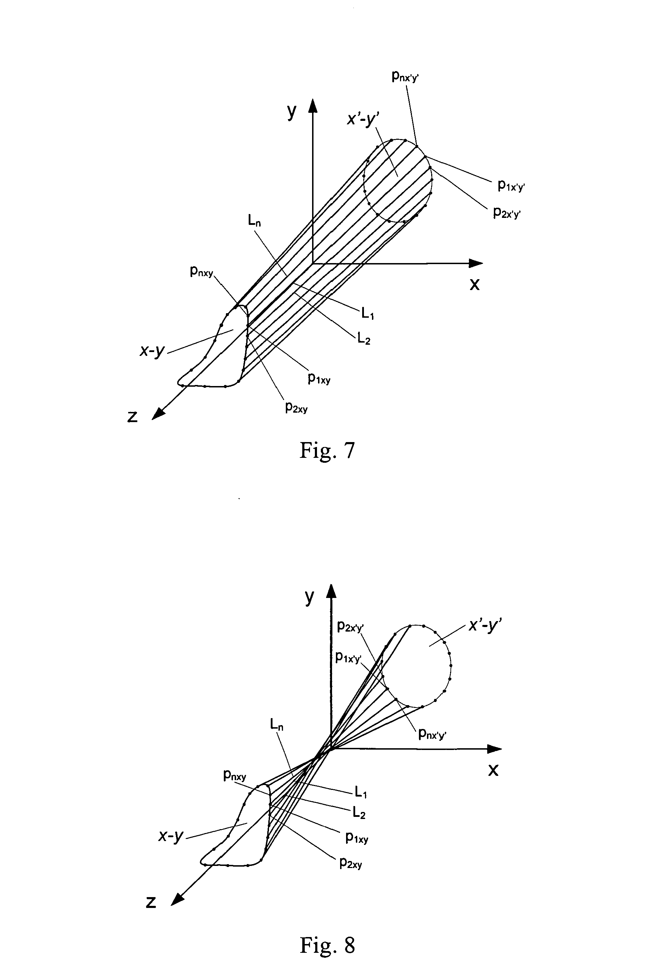

In the case of a faulty shaft, the resulting wireframe of three-dimensional real model image *S* is different from the wireframe shown on fig. 4. Furthermore, various faults may be directly linked to the form of the created three-dimensional real model image *S*. This is highlighted in Fig. 5-8. Fig. 5 shows a wireframe of three-dimensional real model image *S* which would be created by applying the described method to a rotating shaft with an unbalance failure. The three-dimensional real model image *S* is similar to a cylinder placed along z-axis and having elliptical bases in *x-y* and *x'-y'* planes or circular bases in said planes what is not shown on the drawing. Fig. 6 shows a wireframe of the three-dimensional real model image *S* describing a rotating shaft with an eccentricity failure. The three-dimensional real model image *S* is similar to a composition of two cones placed along z-axis, connected with vertices, having elliptical bases in *x-y* and *x'-y'* planes or circular bases in said planes, which is not shown in the drawing. Fig. 7 shows a wireframe of a three-dimensional real model image *S* describing a rotating shaft with a submission of soft-foot failure and an unbalance failure. The three-dimensional real model image *S* is similar to a longitudinal solid having two parallel bases in *x-y* and *x'-y'* planes, of which one base is elliptical or circular what is not shown on the drawing and the second base has an irregular shape. Fig. 8 shows a wireframe of a three-dimensional real model image *S* describing a rotating shaft with a submission of a soft-foot failure and an eccentricity failure. The three-dimensional real model image *S* is similar to a composition of two solids similar to cones connected with vertices, placed along z-axis, having parallel bases in *x-y* and *x'-y'* planes, of which one base is elliptical or circular what is not shown on the drawing and the second base has an irregular shape.

The result is shown on the device 19 for visualizing the result of assessing the technical condition of a rotating shaft.

The method described in steps 1 to 4 generates information about condition of the rotating machinery and in the case of unhealthy machinery it identifies the type of the fault. This classification can be used for further analysis and estimation of the lifetime of bearings.

Using knowledge of a fault type of the rotating machinery it is possible to calculate forces acting on the bearings. By applying known equations, the linear acceleration components of the center of mass may be estimated and subsequently input to Euler's equations of motion and Newton's II law of motion in order to calculate the loads on both bearings. Next, the obtained loads can be used in known empirical equations to estimate the remaining lifetime of the bearings.

### Nomenclature

| **Letter** | **Name** |
|---|---|
| *V_{A}, V_{B}, V_{C}, V_{D}* | analog vibration signals |
| *U_{A}, U_{B}, U_{C}*, U*_{D}* | discrete vibration signals |
| *n* | number of samples in discrete vibration signals |
| *u_{A1}, u_{A2}, ... u_{An}* | samples of the discrete vibration signal *U_{A}* |
| *u_{B1}, u_{B2}, ... u_{Bn}* | samples of the discrete vibration signal *U_{B}* |
| *u_{C1}, u_{C2}, ... u_{Cn}* | samples of the discrete vibration signal *U_{C}* |
| *u_{D1}, u_{D2}, ... u_{Dn}* | samples of the discrete vibration signal *U_{D}* |
| *D_{A}, D_{B}, D_{C}*, D*_{D}* | discrete displacement signals |
| *F_{A}, F_{B}, F_{C}, F_{D}* | discrete filtered displacement signals |
| *P* | constant parameters |
| *x-y* | the plane containing signal *F_{A}(F_{B})* |
| *x'-y'* | the plane containing signal *F_{C}(F_{D})* |
| *S* | three-dimensional real model image |
| *k* | number of patterns |
| *S_{P1}, S_{P2}, S_{Pk}* | patterns of theoretical shapes reflecting various conditions of the rotating shaft |
| *L₁, L₂, ...Lₙ* | lines connecting synchronized points |

## Claims

1. A method of assessing the technical condition of a rotating shaft using a computer device for processing measured data and data delivered by user comprising the steps of:
● measuring synchronized analog vibration signals (*V_{A,} V_{B}, V_{C}, V_{D})* obtained from sensor devices (1, 2, 3, 4) located close to first and second bearing (7, 8) respectively, converting analog vibration signals (*V_{A,} V_{B}, V_{C}, V_{D})* first into discrete vibration signals (*U_{A,} U_{B}, U_{C}, U_{D})* that consist of vectors including samples (*u_{A1,} u_{A2},* ... *u_{An}*), (*u_{B1}, u_{B2},* ... *u_{Bn}),* (*u_{C1}, u_{C2},* ... *u_{Cn}*), (*u_{D1,} u_{D2}, ... u_{Dn}*) respectively, where samples (*u_{A1}, u_{B1}, u_{C1}, u_{D1}), (u_{A2}, u_{B2}, u_{C2}, u_{D2}), ... (u_{An,} u_{Bn}. u_{Cn}, u_{Dn})* are recorded at the same moment of time, and second converting discrete vibration signals *(U_{A}, U_{B}, U_{C}, U_{D})* by known method into discrete displacement signals *(D_{A}, D_{B}, D_{C}, D_{D})* in order to receive discrete filtered displacement signals *(F_{A}, F_{B}, F_{C}, F_{D})* of synchronized samples,
● preparing three-dimensional real model image (*S*) of the rotating shaft, in a form of a wireframe image, that reflects real movement of the rotating shaft near to bearings (7, 8) by transforming discrete filtered displacement signals *(F_{A}, F_{B}, F_{C}, F_{D})* into clusters of points *(p_{1xy}, p_{2xy},* ... *p_{nxy})* and *(p_{1x'y',} p_{2x'y'},* ... *p_{nx'y'}*) forming dynamic path of the rotating shaft (6) on two parallel planes first *(x-y)* and second (*x'-y')* of an orthogonal axis of Cartesian system, in which an orthogonal z-axis corresponds to the longitudinal axis of the rotating shaft (6), and next by connecting with lines *(L₁, L₂, ...Lₙ)* the synchronized points from cluster of points *(p_{1xy}, p_{2xy},* ... *p_{nxy})* located on the plane *(x-y)* and points from cluster of points *(p_{1x'y'}, p_{2x'y'}, ... p_{nx'y'})* located on the plane *(x'-y'),*
● delivering by user into the computer device three-dimensional theoretical models of the rotating shaft containing patterns of theoretical shapes *(S_{P1}, S_{P2}, ... S_{Pk})* in a form of different wireframe images describing different condition of the rotating shaft,
● assessing the technical condition of the rotating shaft by comparing three-dimensional real model image (*S*) in a form of a wireframe with different patterns of theoretical shapes (*S_{P1}, S_{P2}, ... S_{Pk})* in a form of wireframe images and on the base on the comparison, selecting one of the patterns of theoretical shapes *(S_{P1}, S_{P2},... S_{Pk})* which is the closest to the three-dimensional real model image (*S*) and reflects the condition of the rotating shaft.

2. A method according to claim 1, wherein an unbalance failure of the shaft is recognized when three-dimensional real model image (*S*) is presented as the shape similar to the one of the patterns of theoretical shapes *(S_{P1}, S_{P2},... S_{Pk})* being a cylinder placed along z-axis and having elliptical or circular bases in *(x-y)* and *(x'-y'*) planes.

3. A method according to claim 1, wherein an eccentricity failure of the shaft is recognized when three-dimensional real model image (*S*) is presented as the shape similar to the one of the patterns of theoretical shapes (*S_{P1}*, *S_{P2}, ... S_{Pk})* being a composition of two cones placed along z-axis, connected with vertices, having elliptical or circular bases in *(x-y)* and (*x'*-*y'*) planes.

4. A method according to claim 1, wherein submission of soft-foot failure and an unbalance failure of the shaft is recognized when three-dimensional real model image (*S*) is presented as the shape similar to the one of the patterns of theoretical shapes *(S_{P1}, S_{P2}, ... S_{Pk})* being a longitudinal solid having two parallel bases in (*x-y*) and (*x'-y'*) planes, of which one base is elliptical or circular and the second base has an irregular shape.

5. A method according to claim 1, wherein submission of soft-foot failure and an eccentricity failure of the shaft is recognized when three-dimensional real model image (*S*) is presented as the shape similar to the one of the patterns of theoretical shapes *(S_{P1}, S_{P2}, ... S_{Pk})* being a composition of two solids similar to cones connected with vertices, placed along z-axis, having parallel bases in (*x-y*) and (*x'-y'*) planes, of which one base is elliptical or circular and the second base has an irregular shape.

6. A system for assessing the technical condition of a rotating shaft, wherein a shaft (6) is supported by at least two bearings (7, 8) comprising sensor devices (1, 2, 3, 4) for sensing vibration signals of the rotating shaft (6) which are located close to a bearing (7, 8) in the plane orthogonal to the axis of rotation of the shaft and being connected with a measuring device (11) equipped with a computer processing device (13) having standard elements such as processor with a processing module and graphic unit interface, memory and data storage module, **characterized in that** said system comprises a database (17) with patterns of theoretical shapes *(S_{P1}, S_{P2}, ... S_{Pk}),* a module (16) for preparing three-dimensional real model image of the rotating shaft from measured data, said module (16) connected to a comparison module (18) for comparing three-dimensional real model image with patterns of theoretical shapes *(S_{P1}, S_{P2}, ... S_{Pk})* in a form of wireframe images given from database (17) and connected with device (19) for visualization the result of assessing the technical condition of a rotating shaft.

7. A measuring system according to claim 7, wherein the sensor devices (1) and (2) are so arranged that an angle in a plane (*x-y*) between sensor devices (1) and (2) has a value ranging from 30 degree to 150 degrees.

8. A measuring system according to claim 8, wherein the sensor devices (1) and (2) are so arranged that an angle in a plane (*x-y*) between sensor devices (1) and (2) has a value 90 degrees.

9. A measuring system according to claim 7, wherein the sensor devices (3) and (4) are so arranged that an angle in a plane (*x*'-*y'*) between sensor devices (3) and (4) has a value ranging from 30 degree to 150 degrees.

10. A measuring system according to claim 10, the sensor devices (3) and (4) are so arranged that an angle in a plane (*x'-y'*) between sensor devices (3) and (4) has a value 90 degrees.
